(19) Europäisches Patentamt
European Patent Office
Office européen des brevets

(11) **EP 4 249 373 A1**

(12) **EUROPEAN PATENT APPLICATION**

(43) Date of publication:
**27.09.2023  Bulletin 2023/39**

(21) Application number: **22164028.7**

(22) Date of filing: **24.03.2022**

(51) International Patent Classification (IPC):
**B64C 11/46** (2006.01)    **B64C 29/00** (2006.01)
**B64D 27/24** (2006.01)    **B64C 11/16** (2006.01)

(52) Cooperative Patent Classification (CPC):
**B64C 11/46; B64C 29/0033; B64D 27/24;**
B64C 11/16; B64C 2220/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Lilium eAircraft GmbH
82234 Wessling (DE)**

(72) Inventors:
• **Elsahhar, Weam**
**82234 Wessling (DE)**
• **Singh, Deepesh**
**82234 Wessling (DE)**
• **Vermeiren, Sébastien**
**82234 Wessling (DE)**

(74) Representative: **Grünecker Patent- und
Rechtsanwälte
PartG mbB
Leopoldstraße 4
80802 München (DE)**

(54)  **AERIAL VEHICLE, METHOD OF OPERATING AN AERIAL VEHICLE, AND CONTROLLER**

(57)    Aerial vehicle (1) comprising: a plurality of propulsion units (4, 4a, 4b, 4c, 4d) configured to power the aerial vehicle (1), wherein each of the propulsion units (4, 4a, 4b, 4c, 4d) comprises at least one rotor (44, M) and the at least one rotor (44, M) comprises at least one, preferably a number of components (44a) rotating integrally with the rotor (44, M), respectively. In order to reduce the annoyance caused by noise, the number of components (44a) of the rotor (44, M) of at least two, preferably all, of the propulsion units (4, 4a, 4b, 4c, 4d) is different from each other.

Fig. 2

**Description**

The present invention relates to an aerial vehicle, a method of operating an aerial vehicle, and a controller.

Noise pollution is a significant aspect taken into consideration in air traffic. In order to reduce noise pollution due to air traffic, several strategies have been followed. One aspect focuses on reducing the noise pollution of aerial vehicles themselves. In particular, in the prior art there are known aerial vehicles, comprising a plurality of propulsion units configured to power the aerial vehicle, wherein each of the propulsion units comprises at least one rotor, such as a fan, and the at least one rotor comprises at least component, such as blades, rotating integrally with the rotor, respectively. Components such as the fan of the aerial vehicle itself have been developed with the object of reducing noise emission.

Other strategies to reduce noise pollution intend to adapt the routing of aerial vehicles appropriately. In particular, routings have been designed in view of populated areas in order to reduce noise pollution to urban communities.

However, all these aspects may confer considerable limitations to the performance of an aerial vehicle.

Thus, it is an object of the present invention to further reduce annoyance caused by noise pollution of aerial vehicles.

Above object is achieved by an aerial vehicle according to claim 1 and a method according to claim 8.

According to a first aspect, there is provided an aerial vehicle comprising: a plurality of propulsion units configured to power the aerial vehicle, wherein each of the propulsion units comprises at least one rotor and the at least one rotor comprises at least one, preferably a number of components rotating integrally with the rotor, respectively.

Differing from the prior art, in the present invention, the number of components of the rotor of at least two, preferably all, of the propulsion units is different from each other.

Thereby, the at least two of the plurality of propulsion units can be configured such that they have at least one respective, in particular, a fundamental, tonal noise frequency different from each other, at least during operation of the aerial vehicle.

According to the first aspect, the propulsion units and their rotors are identified as noise relevant components. By means of the first aspect, tonal noise frequencies can be scattered. In other words, the sound pressure level of tonal noise frequencies is not accumulated at one tonal noise frequency but is distributed to at least two tonal noise frequencies, namely, at least the respective tonal noise frequencies, among the at least two propulsion units. Thereby, the annoyance caused by noise emission of the aerial vehicle can be lowered in an easy manner.

The expression "respective tonal noise frequency" may refer to the order of the tonal noise frequency. Especially, the fundamental noise frequency may be considered by this term. It may further relate to a tonal noise frequency of the corresponding acoustic source.

The rotors are dynamic portions and thus may contribute significantly to the noise emission of propulsion units, and thus, of the aerial vehicle. In particular, rotors may generate tonal noise frequency in accordance with their respective rotational speed. According to the first aspect, these tonal noise frequencies can be reliably scattered. The rotors may generate noise due to any of a mechanical, aerodynamic, electric, magnetic interactions, etc., or combinations thereof with the ambient or other portions.

It is to be noted that the number of components of at least one rotor of each of the at least two propulsion units may be different from each other. However, preferably, the number of components of each rotor of each of the at least two propulsion units may be different from each other. In this regard, it is even more preferable that the number of components of each rotor in each propulsion unit is different from each other.

Integrally rotating components are components rotating with the same rotational speed and torque. They can be mounted to or integrally formed with a rotor main body. Since the tonal noise frequencies may be proportional to the number of components integrally rotating with the rotor, the tonal noise frequencies can be reliably scattered by making the number of integrally rotating components different from each other.

It is preferable that at least one rotor of the at least two propulsion units has the same function in the at least two propulsion units, respectively, and more preferably, the at least one component has the same function in the rotor, respectively.

As it has been mentioned above, the rotors may interact in many ways with the ambient to generate noise. By the aforementioned configuration it is possible to scatter tonal noise frequencies of rotors representing the same type of acoustic source by means of their function. Rotors having the same function will also be referred to as corresponding rotors. Also, components having the same function in the respective rotors will be referred to as corresponding components.

A corresponding rotor is a rotor being present in any of the at least two propulsion units. In particular, the corresponding rotors may be assigned with the same principal function in each of the at least two propulsion units. In other words, they can be identified by their respective function. Functions may be thrust generation, cooling, driving, transmitting, etc. Preferably, corresponding rotors may be of the same type such as impellers, propellers, compressor stage rotors, etc. Thereby, the same type of acoustic source can be more reliably distributed to several tonal noise frequencies.

Corresponding components may refer to components which are present in the at least two propulsion units, preferably in each of, the plurality of propulsion units. Thus, it is not necessary to add a component to one propulsion unit which is not present in any other of the at least two propulsion units. In particular, corresponding components may be characterized by having the same type of interaction with the ambient or other portions. Corresponding components may be assigned to the principal function of the corresponding rotors. Further, corresponding components may be components having substantially the same structure.

It is further preferable that the at least one component is arranged along a circumferential direction, and/or extending in a radial direction of a rotation axis of the respective rotor.

Such components are sensitive for the above mentioned interactions and can thus be critical in terms of noise emission.

According to another aspect, the rotor may be a thrust generating rotor, preferably, a fan, and/or the at least one component may be a blade.

These rotors may disturb the air stream and also may be exposed to different flow situations, and thus may represent a source for significant noise. By changing the number of components, in particular, blades, which interact with the air stream, among the at least two propulsion units, the aerodynamic interactions in the respective rotors may differ from each other such that the tonal noise frequencies may be reliably scattered.

The thrust generating rotor is configured to generate a thrust force for powering the aerial vehicle and may be a propeller or impeller, for example.

Alternatively or additionally, the rotor may be a rotor of a rotary electric machine, and/or the at least one component may be a pole.

By changing the number of poles provided to the rotor among the at least two propulsion units, the electromagnetic interactions in the respective rotary electric machines may differ from each other such that the tonal noise frequencies may be reliably scattered.

In the above, it is preferable that the rotary electric machine is arranged to drive the thrust generating rotor.

It is preferable that the rotary electric machine is directly coupled to the thrust generating rotor to drive the thrust generating rotor. Thus, both rotors may rotate integrally and may have the same rotational speed in the respective propulsion unit such that scattering of the tonal noise frequencies can be reliably established.

According to still another aspect, the number of components of the rotor of one propulsion unit may not be an integer multiple of the number of components of the rotor of at least one other propulsion unit. Preferably the number of components of the rotor of each propulsion unit is not an integer multiple of the number of components of the rotor of any other propulsion unit.

Thus, an accumulation at any tonal noise frequency can be avoided at least if the propulsion units are operated at the same rotational speed.

According to still another aspect, the aerial vehicle may be of a VTOL type wherein the at least two propulsion units are transferable, preferably pivotable, between are take-off-and-landing state and a cruising state.

In particular, in this kind of aerial vehicle, noise emission is a considerable aspect since the propulsion units, especially, in transition between the two states, tend to generate significant noise. Also, this type of aerial vehicle may be used for traveling in populated areas such that the above aspects can be preferably provided.

Further, it is preferable that the at least two propulsion units are configured such that a sound pressure level of any of the tonal noise frequencies of the at least two propulsion units is lower than a maximum sound pressure level of a tonal noise frequency of a state in which at least one respective tonal noise frequency of the at least two propulsion units is the same, preferably, the sound pressure level of any of the tonal noise frequencies of the at least two propulsion units is equal to or lower than the human ear threshold of recognition of tonal noise.

Thus, the sound pressure level emitted for any tonal noise frequency can be reliably lowered such that the annoyance caused by noise pollution can be decreased. That is, if at least one respective tonal noise frequency in one propulsion unit is equal to the respective tonal noise frequency in at least one other propulsion unit, the sound pressure levels may superimpose to form a maximum at the respective tonal noise frequency which can be reliably prevented from being reached. By lowering the sound pressure level of any tonal noise frequency below the human ear threshold, the burden on human beings can be further reduced.

The foregoing aspects are preferably provided in a state in which the at least two propulsion units are operated in the same manner, in particular, in terms of a rotational speed.

Thus, control of the aerial vehicle can be simplified.

According to a second aspect which can be provided independently from the above aspects, a method of operating an aerial vehicle is provided, the aerial vehicle comprising: a plurality of propulsion units configured to power the aerial vehicle, each of the propulsion units comprises at least one rotor and the at least one rotor comprises at least one, preferably a number, of components rotating integrally with the rotor, respectively. The method comprises at least the step of: operating at least two, preferably all, of the propulsion units at a different rotational speed, preferably, at least temporarily during a steady flight state of the aerial vehicle.

While, according to the aspects above, the structure of the at least two propulsion units is made different to each other while each of the propulsion units may be operated in the same manner, different respective tonal noise frequencies may also be achieved by operating the at least two propulsion units in a manner different from each other. The steady flight state of the aerial vehicle may comprise any of a, in particular substantially vertical, ascent or descent, cruise flight, and turning flight. In particular, it may refer to a state in which the aerial vehicle is in an equilibrium state such as flying along or about at least one axis with constant velocity. In particular, the loads applied by the plurality of propulsion units may substantially not cause any momentum around one axis.

Thus, the tonal noise frequencies may be scattered while a steady flight state may be maintained. In this way, the noise emission can be reduced in an easy manner.

It is preferable that the at least two propulsion units have a corresponding rotor, respectively, as it has been presented above, and the corresponding rotors of the at least two propulsion units are operated with a different rotational speed. In this regard, it is further preferable that the corresponding rotors have the same structure.

If the aerial vehicle is of the VTOL type, it is preferable that the at least two propulsion units are operated in a different manner at least temporarily during a transition of the propulsion units between the take-off-and-landing state and a cruising state.

Thereby, the noise emission during a transient state which may entail significant air turbulences can be reduced.

It is preferable that at least one, preferably several ones, of the plurality of propulsion units is/are operated above a predetermined rotational speed, and at least one other, preferably several others, of the plurality of propulsion units is/are operated below the predetermined rotational speed.

Thus, instead of operating the at least two propulsion units at the same predetermined rotational speed, the rotational speed and, thus, the respective tonal noise frequencies which may be proportional to the rotational speed can be reliably scattered. Preferably, the at least one and the at least other propulsion unit are operated with the same absolute difference to the predetermined rotational speed. Thereby, the rotational speed in average can be made substantially equal to the predetermined rotational speed.

Even more preferably, the number of propulsion units operated above the predetermined rotational speed is the same as the number of propulsion units operated below the predetermined rotational speed.

In this case, the steady flight state can be more reliably maintained and the impact of the at least two propulsion units operated differently on the aerial vehicle can be reduced.

The predetermined speed may be an overall average rotational speed of the propulsion units and/or a design rotational speed of the propulsion units.

Thus, the impact on the aerial vehicle can be further reduced. The design rotational speed may be a rotational speed required if the propulsion units are operated the same way in order to establish cruising.

It is preferable that the at least two propulsion units have the same structure.

Thus, the design as well as the control of the aerial vehicle can be simplified. Also, maintenance can be improved. Further, the scattering of tonal noise frequencies can be more reliably performed since scattering of tonal noise frequencies can be easily achieved by changing the rotational speed among the at least two propulsion units.

It is preferable that the operation of the at least two propulsion units at the different rotational speeds is established depending on a position of the aerial vehicle, in particular, a position with respect to a predetermined area on a flight trajectory.

Thereby, the at least two propulsion units may be operated at different rotational speeds at specific locations on the flight trajectory. If the aerial vehicle is located within the predetermined area the above control may be performed, while if it is located outside of the predetermined area, the at least two propulsion units may be controlled at the same rotational speed. Thus, outside of predetermined areas, flight efficiency can be enhanced while in the predetermined area the annoyance resulting from noise can be reduced.

Still another aspect provides a controller configured to carry out the method of any of aforementioned aspects, when coupled to the at least two propulsion units.

Thereby, the aforementioned effects can be realized by the controller.

According to still another aspect, an aerial vehicle is provided which comprises: a plurality of propulsion units configured to power the aerial vehicle, and the aforementioned controller.

Thus, the aerial vehicle can be reliably controlled to reduce noise emissions in view of the above aspects.

The aforementioned aspects will be further explained in the following by making reference to the accompanying drawings.

Fig. 1 shows a side view of a component of an aerial vehicle

Fig. 2 shows a front view of the aerial vehicle 1

Fig. 3 shows an illustration of the function of the present invention.

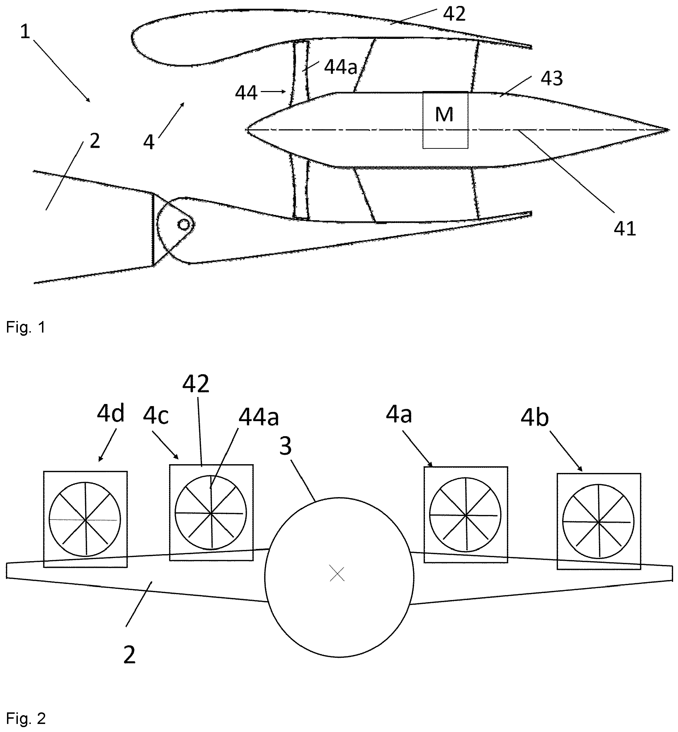

Fig. 1 shows a side view of a part of an aerial vehicle 1. Fig. 2 shows a front view of the aerial vehicle 1. The aerial vehicle 1 comprises a principal lift generation body 2 which may be an airfoil, for example.

The airfoil 2 is attached to a fuselage 3. The airfoil extends substantially along a left-right (widthwise axis) direction of the aerial vehicle 1 to traverse the fuselage 3 which extends substantially along the front rear direction (longitudinal axis). The airfoil 2 comprises an aerodynamic profile in order to generate lift. The chord of the profile may be inclined with respect to the longitudinal axis.

The aerial vehicle 1 further comprises a plurality of propulsion units 4. Each of the plurality of propulsion units 4 is attached to the airfoil 2 at a rear portion, in particular, at a rear end, thereof. The propulsion units 4 are attached to a bracket provided at the rear portion of the airfoil 2, respectively. The propulsion units 4 are each attached to be pivotally about the widthwise axis of the aerial vehicle 1 with respect to the airfoil 2.

That is, the aerial vehicle 1 is of a VTOL (vertical-take-off-and-landing) type. The propulsion unit 4 is pivotable between a cruising state, in which a propulsion axis 41, shown in Fig. 1, is substantially aligned with the longitudinal axis or the chord of the airfoil, and a take-off-and-landing state, in which the propulsion axis 41, is aligned with an up-down direction (gravity axis) of the aerial vehicle 1.

As can be seen in Fig. 2, the number of propulsion units 4 arranged to the left and right side of the longitudinal axis is the same, respectively. Fig. 2 shows two propulsion units 4a and 4b on the left side, and two propulsion units 4c and 4d on the right side of the longitudinal axis. The propulsion units 4a and 4c are located closer to the longitudinal axis than the propulsion units 4b and 4d, respectively. The propulsion units 4a and 4c as well as the propulsion units 4b and 4d have the same distance to the longitudinal axis.

Each propulsion unit 4 has substantially the same structure. Each propulsion unit comprises a shroud 42. The shroud 42 has an aerodynamic peripheral surface 42 which has a profile shape. In this manner, each propulsion unit 4 can function as secondary lift generation body.

The propulsion unit 4 is further electrically driven. To this end, each propulsion unit 4 comprises a rotary electric machine M arranged inside of an inner case 43. The rotary electric machine M is, for example, an electric motor. In particular, the rotary electric machine M may be an electric asynchronous motor, but may be also a synchronous motor. The rotary electric machine may be driven with rotary current such as three phase current, alternate current or direct current. The rotary electric machine comprises a stator and a rotor. For example, the rotor may have two winding portions provided with direct current to form one pole pair. On the outside of the rotor, the stator may comprise a permanent magnet.

The rotary electric machine M is arranged to drive a thrust generating rotor 44 which is embodied as a fan. In particular, the rotor of the rotary electric machine M is coupled to the thrust generating rotor 44 to transmit torque to the thrust generating rotor 44. Thus, each propulsion unit 4 is of a ducted fan type wherein the fan is arranged on the inside of the shroud 42.

A transmission, preferably comprising a plurality of rotors such as gears, may be interposed between the rotor of the rotary electric machine M and the thrust generating rotor 44.

The thrust generating rotor 44 comprises a plurality of blades 44a and a hub. The blades 44a are arranged along a circumferential direction around the propulsion axis 41 and extend in the radial direction of the thrust axis 41. The blades 44a are preferably equally spaced apart from each other along the circumferential direction. The blades 44a are mounted to the hub to rotate integrally with the hub.

The power provided by the rotary electric machine M is transmitted to the hub which integrally rotates with the blades 44a. Thus, the blades 44a are arranged to energize, in particular, accelerate, the air stream to provide a thrust force directed substantially along the propulsion axis 41.

In this embodiment, the number of blades 44a rotating integrally with the hub differs among the propulsion units 4a, 4b, 4c, and 4d. Each propulsion unit has a number of blades 44a different from each other. The blades 44a preferably have the same shape and structure.

The number of blades 44a being different may be the only structural difference among the plurality of propulsion units 4a, 4b, 4c, and 4d. In particular, the propulsion units may be designed to generate substantially the same thrust when operated at the same rotational speed.

Functions and effects of the embodiment are described in the following.

Each propulsion unit of the plurality of propulsion units 4a, 4b, 4c, and 4d has a different number of blades 44a with respect to the number of blades 44a in any other propulsion unit.

Tonal noise frequency typically arise at a frequency $f_t$ according to formula (1):

$$f_t(Hz) = n * \Omega \qquad\qquad (1)$$

Therein, $\Omega$ is the normed rotational speed of the thrust generating rotor 44, which can be expressed as follows:

$$\Omega = RPM/60 \qquad\qquad (2),$$

wherein *RPM* is the number of rotations per minute. In other words, $\Omega$ is the number of rotations per second. It is to be noted that in case no transmission is arranged between the rotary electric machine M and the thrust generating rotor 44, *RPM* may be the same for these portions, but if a transmission is present, *RPM* may differ.

In the above (1), *n* is the number of blades 44a rotating integrally with the respective hub and any integer multiple therefrom.

From the above, it follows that the tonal noise frequency $f_t$ is proportional to the number of blades 44a as an example of integrally rotating components and corresponding components which are present in every propulsion unit 4.

By scattering the number of blades 44a among the propulsion units 4a, 4b, 4c, and 4d, the respective tonal noise frequency $f_t$ emitted from the respective thrust generating rotor 44 of each propulsion unit 4a, 4b, 4c, and 4d is different. In particular, at least the respective fundamental tonal noise frequency of a corresponding acoustic source of each propulsion unit is different, wherein the corresponding acoustic source is the aerodynamic (fluid mechanic) interaction of the blades 44a with the air stream. Accordingly, the sound pressure level does not accumulate at a specific tonal noise frequency.

Thus, annoyance caused by noise can be significantly reduced by a difference in the structure of the propulsion units 4a, 4b, 4c, and 4d.

It is preferred that the number of corresponding components of each thrust generating rotor 44 is not an integer multiple of the number of corresponding components in any other corresponding thrust generating rotor 44. Thus, in view of the above (1), an accumulation at any tonal noise frequency $f_t$ can be avoided at least if the propulsion units are operated at the same rotational speed.

It is further preferable that each propulsion unit, in particular, each rotor, has a number of corresponding components, when divided in prime numbers, having at least one prime number different from the respective prime numbers of the number of corresponding components of any other propulsion unit. For example, propulsion unit 4a may have 8 blades 44a (only primary number 2), while propulsion unit 4b may have 14 blades 44a (primary numbers 2 and 7), while propulsion unit 4c may have 10 blades 44a (primary numbers 2 and 5), and propulsion unit 4d may have 12 blades 44a (primary numbers 2 and 3). Thereby, the least common multiple can be made large. In other words, it is preferable, that with the smallest number of corresponding components among the propulsion units given, the least common multiple is maximized. It should be noted that the different number of blades 44a is not shown in Fig. 2.

Considering the number of blades as specified above, the propulsion units may be arranged such that on both sides the same average of the number of components is achieved.

However, it is also possible to arrange the propulsion units such that the propulsion units closest to the fuselage 3, that is, closest to the longitudinal axis, in the present case, propulsion units 4a and 4c have the largest difference in the number of corresponding components among the plurality of propulsion units. Also, the propulsion units closest to the fuselage 3 may have the maximum least common multiple among any pair of two propulsion units on the left and right side, respectively. Thereby, the annoyance caused by noise towards the fuselage 3 can be reduced. For the same reason, with an increasing distance from the fuselage 3 the difference in the number of components of corresponding rotors can be decreased.

Further, as in the example given, the difference in the number of corresponding components may be uniformly distributed among the propulsion units. That is, the difference between a propulsion unit and the propulsion unit having the next higher number in corresponding components and the one having the next lower number in corresponding components can be calculated as:

$$dif = \frac{n_{basic}}{PU} \qquad\qquad (3)$$

In (3), *dif* is the difference, $n_{basic}$ is the smallest number of components (blades in the present case) among the corresponding rotors, and PU is the number of propulsion units. (3) applied to the aforementioned example results in the difference being 2.

In the above embodiment, the corresponding rotor considered is the thrust generating rotor 44 which represents one corresponding acoustic source for each propulsion unit 4. Thus, corresponding dynamic portions which significantly contribute to the noise emission can be scattered with respect to their fundamental tonal noise frequency. The thrust generating rotor need not be the fan but can be any other rotor in the propulsion unit configured to generate thrust such as a propeller. Also, the rotor may be a single compressor or turbine stage in a combustion propulsion unit. The principal function of the thrust generating rotor 44 is to generate thrust. As the blades 44a energize the air stream, they are assigned to the principal function of the rotor.

Alternatively or additionally, the corresponding rotor having the different number of components may be the rotor of the rotary electric machine M. In this regard, the different number of components may be represented by a different number of poles in the respective rotary electric machine M of each propulsion unit. In particular, the number of pole pairs may be different, wherein each pole pair counts as one component. Also, considering a rotary current, the number of poles may be represented by the number of phases provided by the rotary current. The poles can be formed by the winding portions which are also arranged along a circumferential direction and extend in the radial direction.

Alternatively or additionally, a corresponding rotor may be a portion of a transmission, for example, between the rotary electric machine M and the thrust generating rotor 44, and may comprise a meshing portion such as a gear or worm shaft, wherein the different number of components may be represented by a different number of meshing components such as teeth to be engaged with an adjacent gear.

In the above, corresponding rotors are preferably of the same type and have substantially the same structure.

Further, the propulsion units having the different number of components are preferably attached to the same type of attaching object, preferably, the same type of lift generating body. In particular, they may be attached to the airfoil 2 or a canard being examples of an attaching object. However, they may also be attached to the fuselage 3, for example.

The aerial vehicle 1 may further comprise at least one controller, for example, an ECU coupled to the propulsion units to control operation of the propulsion units 4a, 4b, 4c, and 4d. A controller may be provided for each propulsion unit while a central controller may be coupled to theses controllers of the propulsion units to provide them with signals.

In the above embodiment, the controller preferably controls the corresponding rotors to operate at the same rotational speed at least during a steady flight state.

However, in view of (1), the propulsion units 4a, 4b, 4c, and 4d may have the same structure, but may be controlled to operate in a different manner. In particular, the propulsion units may be controlled to operate at a rotational speed different from each other during a steady flight state.

In particular, the propulsion units 4a and 4c having the same distance to the longitudinal axis may be operated at a rotational speed different from each other, and preferably, also different from a rotational speed of the propulsion units 4b and 4d. Accordingly, also the propulsion units 4b and 4d having substantially the same distance to the longitudinal axis may be operated with a different rotational speed.

The propulsion units 4a, 4b, 4c and 4d may be operated such that two propulsion units, for example, 4a and 4c, being located closest to the fuselage 3 are operated below an overall average rotational speed while the outer propulsion units 4b and 4d are operated above the overall average rotational speed. Thereby, the noise emission towards the fuselage can be reduced.

The overall rotational speed is one example of a predetermined rotational speed which is preferably a design rotational speed of the respective propulsion units. The design rotational speed may be determined based on the thrust requirements during cruising.

In particular, the propulsion units 4a, 4b, 4c, and 4d can be operated such that the thrust to maintain the steady flight state is maintained.

The propulsion units 4a, 4b, 4c, and 4d are further preferably controlled such that they do not provide a torque, in particular, around at least one of the three principal axes. Thereby, the steady flight state can be reliably maintained.

Also, the propulsion units may be controlled such that on each side of the longitudinal axis, the same average rotational speed is established. Thereby, substantially the same thrust can be generated on both sides of the longitudinal axis such that the structure can be stressed in a substantially uniform manner.

As an example, on one side with respect to the longitudinal axis at least one pair of propulsion units 4a and 4b may have the same absolute difference regarding the overall average rotational speed. Accordingly, on the other side, the propulsion units 4c and 4d may also be operated to have the same absolute difference with respect to the overall rotational average speed.

The above control may be performed depending on the location on the flight trajectory. For example, the controller may receive navigation data such as GPS data to locate the aerial vehicle 1. If the aerial vehicle is outside of a predetermined area, the propulsion units may all be operated at their design rotational speed. If the aerial vehicle is within the predetermined area, the above control at different rotational speeds can be established.

It is to be noted that the predetermined area may comprise noise sensitive area such as cities and/or environmental protection areas. The predetermined area may be determined as an area encompassing the noise sensitive area by a predetermined distance, or only be the noise sensitive area.

The predetermined area can be stored in a storage of the controller or in an external storage which can communicate with the controller.

The control is preferably performed over a couple of minutes, preferably more than 10 minutes, during the steady flight state, or over a couple of seconds, preferably more than 5 seconds, during a transition state of the propulsion units between the cruising state and the take-off-and landing state.

In the above control, preferably the rotational speed of a drive portion, that is, the rotary electric machine M, in particular, the current applied thereto, of each propulsion unit is manipulated to control the rotational speed of the thrust generating rotor 44 and/or the rotor of the rotary electric machine.

It is to be noted that the control may also be applied to propulsion units having a different structures, in particular, a different number of components in corresponding rotors. Then, it is preferable that the at least two propulsion units being operated at a different rotational speed depending on the difference in the number of components.

It is preferable that the propulsion units operated in a different manner have corresponding rotors of the same type and structure. Thereby, scattering can be reliably performed as no structural difference affects above formula (1).

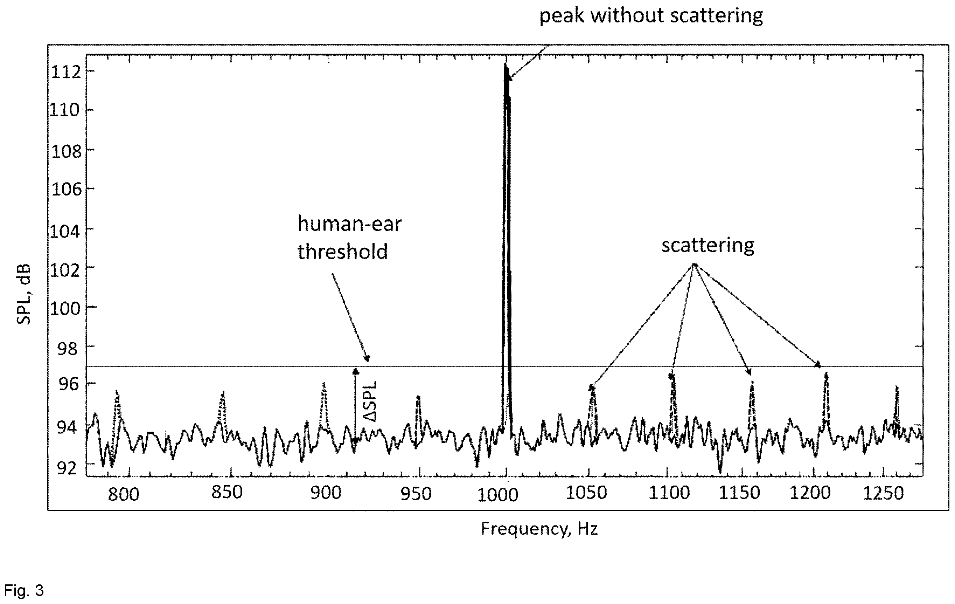

Finally, Fig. 3 exemplarily illustrates the effect of the present invention.

The abscissae indicates a frequency while the ordinate specifies the sound pressure level. The black thick line shows the noise emission in case of propulsion units operated at the same rotational speed and/or having the same number of integrally rotating components. As can be seen therefrom, a significant peak which stands out with respect to the broadband noise arises at one specific frequency and is thus considered as significant noise pollution.

Contrary thereto, by means of the present invention, a plurality of smaller peaks (in dashed lines) at a plurality of frequencies is created by the present invention.

Accordingly, a sound pressure level of any of the tonal noise frequencies of the at least two propulsion units having a different structure or operated differently is lower than a maximum sound pressure level of a tonal noise frequency of a state in which at least one respective tonal noise frequency of the at least two propulsion unit is the same, that is, the state of the significant peak in the black thick line. In particular, the sound pressure level of any of the tonal noise frequencies (any of the smaller peaks in dotted lines) of the at least two propulsion units is equal to or lower than the human ear threshold of recognition of tonal noise with respect to the broadband noise.

Thus, the sound pressure level emitted for any tonal noise frequency can be reliably lowered such that the annoyance caused by noise can be decreased.

The measurement of the perception of a tone above the broadband noise may be performed according to ISO/FDIS 1996-2.

In the present disclosure, terms as "at least" comprise the amount specified and the entirety, unless otherwise specified.

In the above embodiments, the number of propulsion units is four. However, the number may be any other number meeting the criterion of at least two. Preferably, the number of propulsion units arranged on both sides of the longitudinal axis is the same, respectively. Also, not all of the plurality of propulsion units 4 need to be provided with the structural differences or be operated in a different manner, while at least two do so. In this case, in the formulas only the number of propulsion units having the different structure or being operated in a different manner can be considered.

Dimensions, measures, and relations should be construed with the tolerances generally apparent to the skilled person.

**Claims**

1. Aerial vehicle (1) comprising:

   a plurality of propulsion units (4, 4a, 4b, 4c, 4d) configured to power the aerial vehicle (1),
   wherein each of the propulsion units (4, 4a, 4b, 4c, 4d) comprises at least one rotor (44, M) and the at least one rotor (44, M) comprises at least one, preferably a number of components (44a) rotating integrally with the rotor (44, M), respectively,
   **characterized in that**
   the number of components (44a) of the rotor (44, M) of at least two, preferably all, of the propulsion units (4, 4a, 4b, 4c, 4d) is different from each other.

2. The aerial vehicle (1) according to claim 1,
   wherein at least one rotor (44, M) of the at least two propulsion units (4, 4a, 4b, 4c, 4d) has the same function in the at least two propulsion units (44, M), respectively, and preferably, the at least one component (44a) has the same function in the rotor (44, M).

3. The aerial vehicle (1) according to claim 1 or 2,
   wherein the at least one component (44a) is arranged along a circumferential direction, and/or extends in a radial direction, in the rotor (44, M).

4. The aerial vehicle (1) according to any of the preceding claims,

   wherein the rotor (44) is a thrust generating rotor, more preferably, a fan,
   and/or the at least one component (44a) is a blade.

5. The aerial vehicle (1) according to any of the preceding claims,

   wherein the rotor (M) is a rotor of a rotary electric machine (M),
   and/or the at least one component is a pole.

6. The aerial vehicle (1) according to any of the preceding claims,
   wherein the number of components (44a) of the rotor (44, M) of one propulsion unit (4, 4a, 4b, 4c, 4d) is not an integer multiple of the number of components (44a) of the rotor of at least one other propulsion unit (4, 4a, 4b, 4c, 4d), preferably the number of components (44a) of the rotor (44, M) of each propulsion unit (4, 4a, 4b, 4c, 4d) is not an integer multiple of the number of components (44a) of the rotor of any other propulsion unit (4, 4a, 4b, 4c, 4d).

7. The aerial vehicle (1) according to any of the preceding claims, wherein
   the aerial vehicle is of a VTOL type wherein the propulsion units (4, 4a, 4b, 4c, 4d) are transferable, preferably pivotable, between are take-off-and-landing state and a cruising state.

8. A method of operating an aerial vehicle (1), the aerial vehicle (1) comprising:

   a plurality of propulsion units (4, 4a, 4b, 4c, 4d) configured to power the aerial vehicle (1),
   each of the propulsion units (4, 4a, 4b, 4c, 4d) comprises at least one rotor (44, M) and the at least one rotor (44, M) comprises at least one, preferably a number, of components (44a) rotating integrally with the rotor (44, M), respectively,
   **characterized in that** the method comprises at least the step of:
   operating at least two, preferably all, of the propulsion units (4, 4a, 4b, 4c, 4d) at a different rotational speed, preferably, at least temporarily during a steady flight state of the aerial vehicle (1).

9. The method according to claim 8, wherein

   at least one, preferably several ones, of the propulsion units (4b, 4d) is/are operated above a predetermined rotational speed,
   and at least one other, preferably several others, of the propulsion units (4a, 4c) is/are operated below the predetermined rotational speed.

10. The method according to claim 9, wherein
    the number of propulsion units (4b, 4d) operated above the predetermined rotational speed is the same as the number of propulsion units (4a, 4c) operated below the predetermined rotational speed.

11. The method according to claim 9 or 10, wherein
    the predetermined rotational speed is an overall average rotational speed of the propulsion units (4, 4a, 4b, 4c, 4d) and/or a design rotational speed of the propulsion units (4, 4a, 4b, 4c, 4d).

12. The method according to any of claims 8 to 11, wherein
    the rotors (44, M) of the at least two propulsion units (4, 4a, 4b, 4c, 4d) have the same number of components (44a).

13. The method according to any of claims 8 to 12, wherein the operation of the at least two propulsion units (4, 4a, 4b, 4c, 4d) at the different rotational speeds is established depending on a position of the aerial vehicle, in particular, a position with respect to a predetermined area on a flight trajectory.

14. A controller configured to carry out the method of any of claims 8 to 13, when coupled to the at least two propulsion units (4, 4a, 4b, 4c, 4d).

15. An aerial vehicle (1) comprising:
    a plurality of propulsion units (4, 4a, 4b, 4c, 4d) configured to power the aerial vehicle (1), and the controller of claim 14.

Fig. 1

Fig. 2

Fig. 3

EP 4 249 373 A1

**EUROPEAN SEARCH REPORT**

Application Number

EP 22 16 4028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 543 119 A1 (AURORA FLIGHT SCIENCES CORP [US]) 25 September 2019 (2019-09-25) | 1-4, 6-11, 13-15 | INV. B64C11/46 B64C29/00 |
| A | * claim 6 * <br> * figure 3a * | 5,12 | B64D27/24 B64C11/16 |
| X | US 2019/185149 A1 (PANTALONE GIULIA [US] ET AL) 20 June 2019 (2019-06-20) | 1-4, 7-11,14, 15 | |
| A | * paragraph [0038] * <br> * figure 1 * | 5,6,12, 13 | |
| X | US 9 745 050 B2 (AMAZON TECH INC [US]) 29 August 2017 (2017-08-29) | 1-4,7 | |
| A | * figure 1A * | 5,6,8-15 | |
| X | JAMES ?: "Flying a quadcopter with 4 different props", INTERNET CITATION, 14 December 2016 (2016-12-14), XP002792284, Retrieved from the Internet: URL:https://www.propwashed.com/flying-quad copter-4-different-props/ [retrieved on 2019-06-21] | 1-4,7 | TECHNICAL FIELDS SEARCHED (IPC) B64C B64D |
| A | * Title * | 5,6,8-15 | |
| X | US 9 422 055 B1 (BECKMAN BRIAN C [US] ET AL) 23 August 2016 (2016-08-23) | 8-12,14, 15 | |
| A | * claim 1 * <br> * figure 6A * | 1-7,13 | |
| X | US 11 174 019 B2 (JOBY AERO INC [US]) 16 November 2021 (2021-11-16) | 8-12,14, 15 | |
| A | * figure 1 * | 1-7,13 | |

-/--

The present search report has been drawn up for all claims

| Place of search | Date of completion of the search | Examiner |
|---|---|---|
| Munich | 3 August 2022 | Duval, Yann |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 22 16 4028

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 932 597 A1 (ROLLS ROYCE NAM TECH INC [US]; ROLLS ROYCE CORP [US] ET AL.) 11 December 2016 (2016-12-11) | 1,5 | |
| A | * claim 2 * ----- | 2-4,6-15 | |
| A | YANG YANNIAN ET AL: "Experimental study on noise reduction of a wavy multi-copter rotor", APPLIED ACOUSTICS, ELSEVIER PUBLISHING, GB, vol. 165, 19 March 2020 (2020-03-19), XP086150665, ISSN: 0003-682X, DOI: 10.1016/J.APACOUST.2020.107311 [retrieved on 2020-03-19] * the whole document * ----- | 1-15 | |

TECHNICAL FIELDS
SEARCHED       (IPC)

The present search report has been drawn up for all claims

| Place of search | Date of completion of the search | Examiner |
|---|---|---|
| Munich | 3 August 2022 | Duval, Yann |

EPO FORM 1503 03.82 (P04C01)

**page 2 of 2**

## ANNEX TO THE EUROPEAN SEARCH REPORT
## ON EUROPEAN PATENT APPLICATION NO.

EP 22 16 4028

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2022

| Patent document cited in search report | | Publication date | Patent family member(s) | | Publication date |
|---|---|---|---|---|---|
| EP 3543119 | A1 | 25-09-2019 | CN | 110294116 A | 01-10-2019 |
| | | | EP | 3543119 A1 | 25-09-2019 |
| | | | JP | 2019214354 A | 19-12-2019 |
| | | | KR | 20190111740 A | 02-10-2019 |
| | | | US | 2019291856 A1 | 26-09-2019 |
| US 2019185149 | A1 | 20-06-2019 | AU | 2018388449 A1 | 11-06-2020 |
| | | | CN | 111684705 A | 18-09-2020 |
| | | | EP | 3698464 A1 | 26-08-2020 |
| | | | SG | 11202004747W A | 29-07-2020 |
| | | | US | 2019185149 A1 | 20-06-2019 |
| | | | WO | 2019125832 A1 | 27-06-2019 |
| US 9745050 | B2 | 29-08-2017 | US | 2017174317 A1 | 22-06-2017 |
| | | | US | 2017334546 A1 | 23-11-2017 |
| | | | US | 2018186444 A1 | 05-07-2018 |
| US 9422055 | B1 | 23-08-2016 | US | 9422055 B1 | 23-08-2016 |
| | | | US | 9802702 B1 | 31-10-2017 |
| US 11174019 | B2 | 16-11-2021 | CN | 111433122 A | 17-07-2020 |
| | | | EP | 3704018 A1 | 09-09-2020 |
| | | | KR | 20200067901 A | 12-06-2020 |
| | | | US | 2019135408 A1 | 09-05-2019 |
| | | | US | 2019135413 A1 | 09-05-2019 |
| | | | US | 2019135425 A1 | 09-05-2019 |
| | | | US | 2022144420 A1 | 12-05-2022 |
| | | | WO | 2019090191 A1 | 09-05-2019 |
| CA 2932597 | A1 | 11-12-2016 | CA | 2932597 A1 | 11-12-2016 |
| | | | CN | 106314805 A | 11-01-2017 |
| | | | EP | 3104519 A2 | 14-12-2016 |
| | | | JP | 6693813 B2 | 13-05-2020 |
| | | | JP | 2017005986 A | 05-01-2017 |
| | | | KR | 20160146573 A | 21-12-2016 |
| | | | US | 2016362187 A1 | 15-12-2016 |
| | | | US | 2020047897 A1 | 13-02-2020 |

EPO FORM P0459

For more details about this annex : see Official Journal of the European Patent Office, No. 12/82